# EUROPEAN PATENT SPECIFICATION

(11) **EP 1 767 315 B1**
(45) Date of publication and mention of the grant of the patent: **17.12.2008**
(21) Application number: 05774695.0
(22) Date of filing: 25.08.2005
(51) Int. Cl.: B25D 17/24, B25D 16/00

(54) **Power tool with dynamic vibration reducer**
Werkzeugmaschine mit dynamischem Schwingungsdämpfer
Machine-outil avec réducteur dynamique de vibrations

(30) Priority: 27.08.2004 JP 2004249011
(43) Date of publication of application: 28.03.2007
(60) Divisional application: 08017019.4
(73) Proprietor: Makita Corporation, Anjo-shi, Aichi-ken 446-8502 (JP)
(72) Inventor: AOKI, Yonosuke, c/o MAKITA CORPORATION, Anjo-shi, Aichi 4468502 (JP)
(74) Representative: Kramer - Barske - Schmidtchen
(86) International application number: PCT/JP2005/015460
(87) International publication number: WO 2006/022345

(56) References cited:
- EP-A- 0 066 779
- DE-C1- 815 179
- FR-A- 2 237 734
- JP-A- 52 109 673
- JP-A- 57 066 879
- JP-A- 2003 011 073
- JP-A- 2004 216 524
- US-A- 2 875 731

## Description

### FIELD OF THE INVENTION

The present invention relates to a power tool as disclosed in the preamble of claim 1.

### BACKGROUND OF THE INVENTION

Japanese non-examined laid-open Patent Publication No. 52-109673 discloses an electric hammer having a vibration reducing device. In the known electric hammer, a vibration proof chamber is integrally formed with a body housing (and a motor housing) in a region on the lower side of the body housing and forward of the motor housing. A dynamic vibration reducer is disposed within the vibration proof chamber.

In the above-mentioned known electric hammer, the vibration proof chamber that houses the dynamic vibration reducer is provided in the housing in order to provide an additional function of reducing vibration in working operation. As a result, however, the electric hammer increases in size JP 2004-216 524 A discloses a power tool according to the preamble of claim 1. US 2002/0185 288 A1 and GB 2 086 005 A disclose further power tools having vibration reducers.

### SUMMARY OF THE INVENTION

It is, accordingly, an object of the present invention to provide an effective technique for reducing vibration in working operation, while avoiding size increase of a power tool.

### (Subject-matter of the Invention)

The above-described object is achieved by a power tool according to claim 1.
The "power tool" may particularly includes power tools, such as a hammer, a hammer drill, a jigsaw and a reciprocating saw, in which a tool bit performs a working operation on a workpiece by reciprocating. When the power tool is a hammer or a hammer drill, the "internal mechanism" according to this invention comprises a motion converting mechanism that converts the rotating output of the motor to linear motion and drives the tool bit in its longitudinal direction, and a power transmitting mechanism that appropriately reduces the speed of the rotating output of the motor and transmits the rotating output as rotation to the tool bit.

In the present invention, the dynamic vibration reducer is disposed in the power tool by utilizing a space within the housing. Therefore, the dynamic vibration reducer can perform a vibration reducing action in working operation, while avoiding size increase of the power tool. Further, the dynamic vibration reducer can be protected from an outside impact, for example, in the event of drop of the power tool. The manner in which the dynamic vibration reducer is "disposed by utilizing a space between the housing and the internal mechanism" includes not only the manner in which the dynamic vibration reducer is disposed by utilizing the space as-is, but also the manner in which it is disposed by utilizing the space changed in shape.
The present invention will be more apparent from the following detailed description and the drawings.

### BRIEF DESCRIPTION OF THE DRAWINGS

FIG. 1 is a side view showing a hammer drill according to an example useful for under standing the invention, with an outer housing and an inner housing shown in section.
FIG. 2 is a side view of the hammer drill, with the outer housing shown in section.
FTG. 3 is a plan view of the hammer drill, with the outer housing shown in section.
FIG. 4 is a plan view of the hammer drill, with the outer housing shown in section.
FIG. 5 is a rear view of the hammer drill, with the outer housing shown in section.

### DETAILED DESCRIPTION OF THE INVENTION

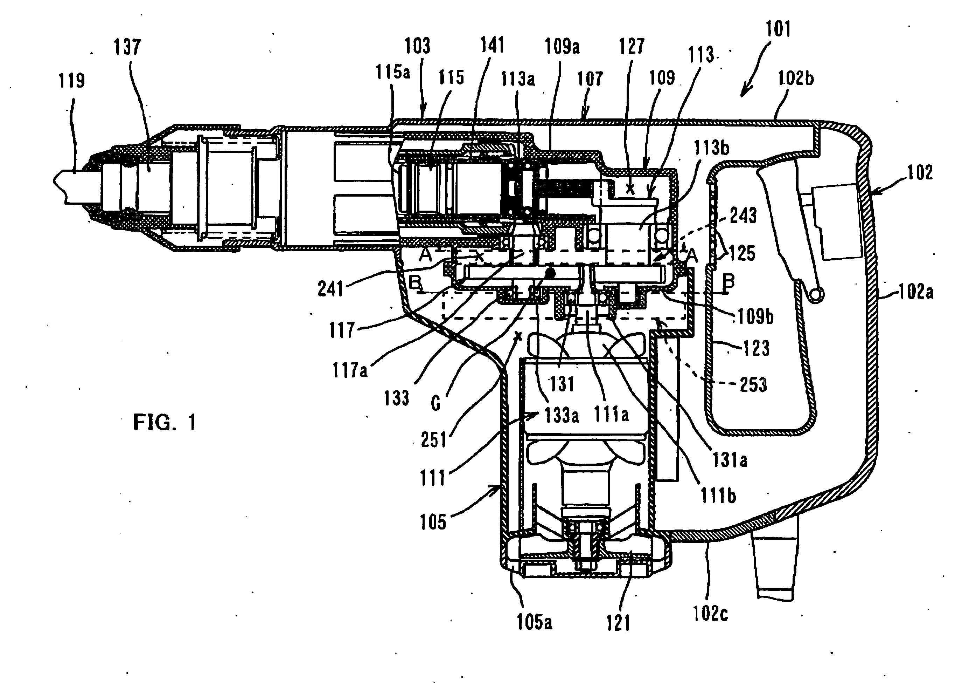

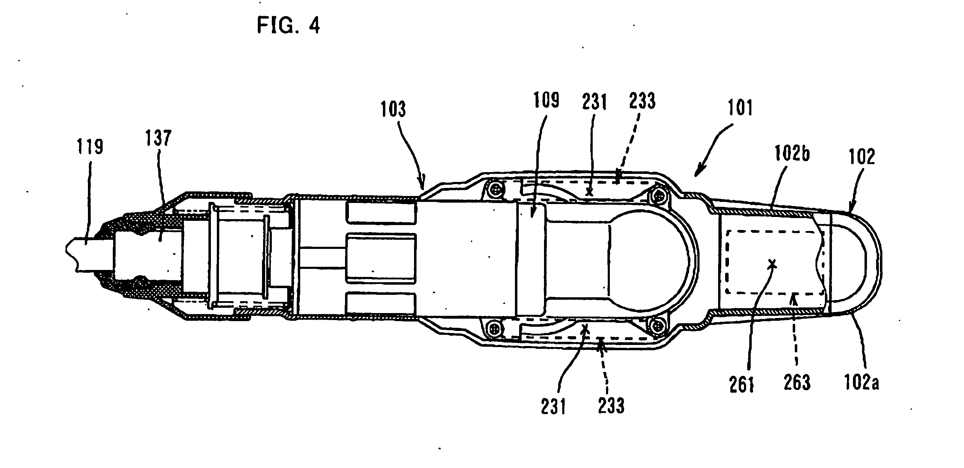

Examples useful for under standing the invention and representative embodiments of the present invention will now be described with reference to FIGS. 1 to 7. In each embodiment, an electric hammer drill will be explained as a representative example of a power tool according to the present invention. Each of the embodiments features a dynamic vibration reducer disposed in a space within a housing or a handgrip, Before a detailed explanation of placement of the dynamic vibration reducer, the configuration of the hammer drill will be briefly described with reference to FIG.1. The hammer drill 101 mainly includes a body 103, a hammer bit 119 detachably coupled to the tip end region (on the left side as viewed in FIG. 1) of the body 103 via a tool holder 137, and a handgrip 102 connected to a region of the body 103 on the opposite side of the hammer bit 119. The body 103, the hammer bit 119 and the handgrip 102 are features that correspond to the "housing", the "tool bit" and the "handgrip", respectively, according to the present invention.

The body 103 of the hammer drill 101 mainly includes a motor housing 105, a crank housing 107, and an inner housing 109 that is housed within the motor housing 105 and the crank housing 107. The motor housing 105 and the crank housing 107 are features that correspond to the "outer housing" according to this invention, and the inner housing 109 corresponds to the "inner housing". The motor housing 105 is located on the lower part of the handgrip 102 toward the front and houses a driving motor 111. The driving motor 111 is a feature that corresponds to the "motor" according to this invention.
In the present embodiments, for the sake of convenience of explanation, in the state of use in which the user holds the handgip 102, the side of the hammer bit 119 is taken as the front side and the side of the handgrip 102 as the rear side. Further, the side of the driving motor 111 is taken as the lower side and the opposite side as the upper side; the vertical direction and the horizontal direction which are perpendicular to the longitudinal direction are taken as the vertical direction and the lateral direction, respectively.

The crank housing 107 is located on the upper part of the handgrip 102 toward the front and butt-joined to the motor housing 105 from above. The crank housing 107 houses the inner housing 109 together with the motor housing 105. The inner housing 109 houses a cylinder 141, a motion converting mechanism 113, and a gear-type power transmitting mechanism 117. The cylinder 141 houses a striking element 115 that is driven to apply a striking force to the hammer bit 119 in its longitudinal direction, The motion converting mechanism 113 comprises a crank mechanism and converts the rotating output of the driving motor 111 to linear motion and then drives the striking element 115 via an air spring. The power transmitting mechanism 117 transmits the rotating output of the driving motor 111 as rotation to the hammer bit 119 via a tool holder 137. Further, the inner housing 109 includes an upper housing 109a and a lower housing 109b. The upper housing 109a houses the entire cylinder 141 and most of the motion converting mechanism 113 and power transmitting mechanism 117, while the lower housing 109b houses the rest of the motion converting mechanism 113 and power transmitting mechanism 117. The motion converting mechanism 113, the striking element 115 and the power transmitting mechanism 117 are features that correspond to the "internal mechanism" according to this invention.

The motion converting mechanism 113 appropriately converts the rotating output of the driving motor 111 to linear motion and then transmits it to the striking element 115. As a result, an impact force is generated in the longitudinal direction of the hammer bit 119 via the striking element 115. The striking element 115 includes a striker 115a and an intermediate element in the form of an impact bolt (not shown). The striker 115a is driven by the sliding movement of a piston 113a of the motion converting mechanism 113 via the action of air spring within the cylinder 141.
Further, the power transmitting mechanism 117 appropriately reduces the speed of the rotating output of the driving motor 111 and transmits the rotating output as rotation to the hammer bit 119. Thus, the hammer bit 119 is caused to rotate in its circumferential direction. The hammer drill 101 can be switched by appropriate operation of the user between a hammer mode in which a working operation is performed on a workpiece by applying only a striking force to the hammer bit 119 in the longitudinal direction, and a hammer drill mode in which a working operation is performed on a workpiece by applying an longitudinal striking force and a circumferential rotating force to the hammer bit 119.

The hammering operation in which a striking force is applied to the hammer bit 119 in the longitudinal direction by the motion converting mechanism 113 and the striking element 115, and the hammer-drill operation in which a rotating force is applied to the hammer bit 119 in the circumferential direction by the power transmitting mechanism 117 in addition to the striking force in the longitudinal direction are known in the art. Also, the mode change between the hammer mode and the hammer drill mode is known in the art. These known techniques are not directly related to this invention and therefore will not be described in further detail.

The hammer bit 119 moves in the longitudinal direction on the axis of the cylinder 141. Further, the driving motor 111 is disposed such that the axis of an output shaft 111a is perpendicular to the axis of the cylinder 141. The inner housing 109 is disposed above the driving motor 111.

The handgrip 102 includes a grip 102a to be held by the user and an upper and a lower connecting portions 102b, 102c that connect the grip 102a to the rear end of the body 103. The grip 102a vertically extends and is opposed to the rear end of the body 103 with a predetermined spacing. In this state, the grip 102a is detachably connected to the rear end of the body 103 via the upper and lower connecting portions 102b, 102c.

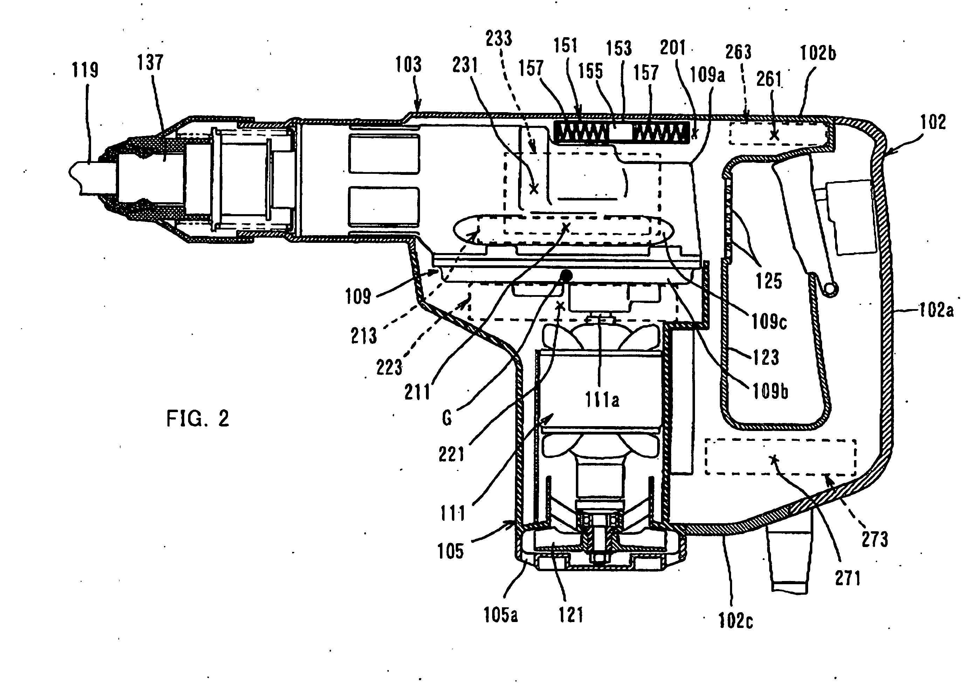

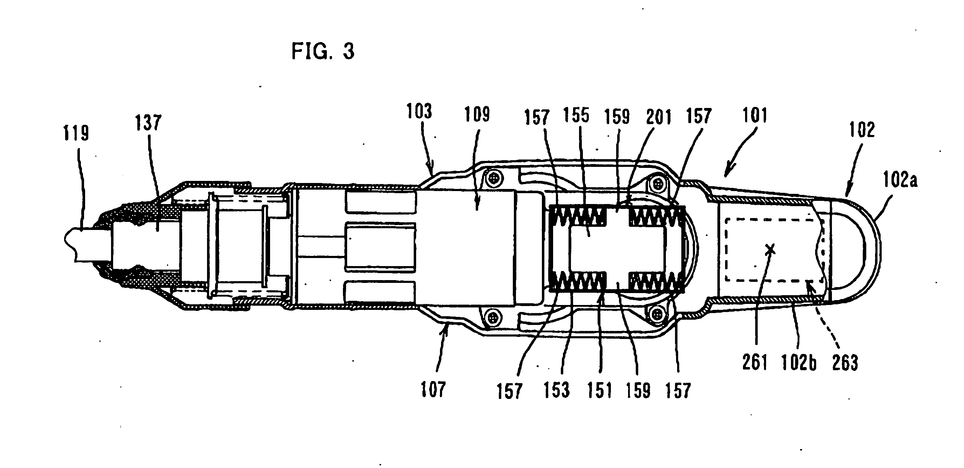

A dynamic vibration reducer 151 is provided in the hammer drill 101 in order to reduce vibration which is caused in the hammer drill 101, particularly in the longitudinal direction of the hammer bit 119, during hammering or hammer-drill operation. The dynamic vibration reducer 151 is shown as an example in FIGS. 2 and 3 in sectional view. The dynamic vibration reducer 151 mainly includes a box-like (or cylindrical) vibration reducer body 153, a weight 155 and biasing springs 157 disposed on the front and rear sides of the weight 155. The weight 155 is disposed within the vibration reducer body 153 and can move in the longitudinal direction of the vibration reducer body 153. The biasing spring 157 is a feature that corresponds to the "elastic element" according to the present invention, The biasing spring 157 applies a spring force to the weight 155 when the weight 155 moves in the longitudinal direction of the vibration reducer body 153.

Placement of the dynamic vibration reducer 151 will now be explained with respect to a useful example and embodiments. (Useful example for understanding the invention)
In the example, as shown in FIGS. 2 and 3, the dynamic vibration reducer 151 is disposed by utilizing a space in the upper region inside the body 103, or more specifically, a space 201 existing between the inner wall surface of the upper region of the crank housing 107 and the outer wall surface of the upper region of an upper housing 109a of the inner housing 109. The dynamic vibration reducer 151 is disposed in the space 201 such that the direction of movement of the weight 155 or the vibration reducing direction coincides with the longitudinal direction of the hammer bit 119. The space 201 is dimensioned to be larger in the horizontal directions (the longitudinal and lateral directions) than in the vertical direction (the direction of the height). Therefore, in this embodiment, the dynamic vibration reducer 151 has a shape conforming to the space 201. Specifically, as shown in sectional view, the vibration reducer body 153 has a box-like shape short in the vertical direction and long in the longitudinal direction. Further, projections 159 are formed on the right and left sides of the weight 155 in the middle in the longitudinal direction. The biasing springs 157 are disposed between the projections 159 and the front end and the rear end of the vibration reducer body 153. Thus, the amount of travel of the weight 155 can be maximized while the longitudinal length of the vibration reducer body 153 can be minimized. Further, the movement of the weight 155 can be stabilized.

Thus, in this example the dynamic vibration reducer 151 is disposed by utilizing the space 201 existing within the body 103. As a result, vibration caused in working operation of the hammer drill 101 can be reduced by the vibration reducing action of the dynamic vibration reducer 151, while size increase of the body 103 can be avoided, Further, by placement of the dynamic vibration reducer 151 within the body 103, the dynamic vibration reducer 151 can be protected from an outside impact in the event of drop of the hammer drill 101.

As shown in FIG. 2, generally, a center of gravity G of the bammer drill 101 is located below the axis of the cylinder 141 and slightly forward of the axis of the driving motor 111. Therefore, when, like this example, the dynamic vibration reducer 151 is disposed within the space 201 existing between the inner wall surface of the upper region of the crank housing 107 and the outer wall surface of the upper region of the upper housing 109a of the inner housing 109, the dynamic vibration reducer 151 is disposed on the side of the axis of the cylinder 141 which is opposite to the center of gravity G of the hammer drill 101. Thus, the center of gravity G of the hammer drill 101 is located closer to the axis of the cylinder 141, which is effective in lessening or preventing vibration in the vertical direction. Further, the dynamic vibration reducer 151 disposed in the space 201 is located relatively near to the axis of the cylinder 141, so that it can perform an effective vibration reducing action against vibration in working operation using the hammer drill 101.

### (First Embodiment)

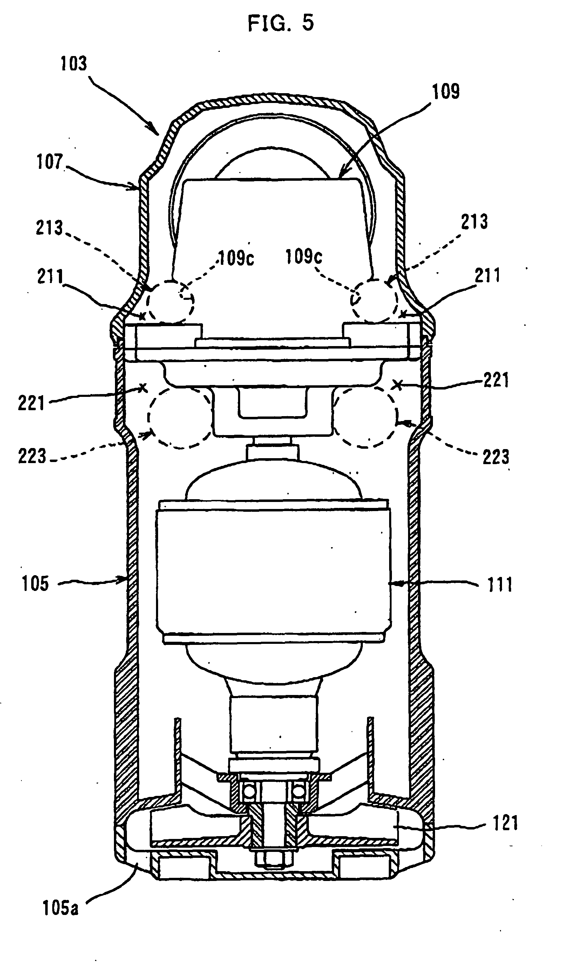

In the first representative embodiment, as shown in FIGS. 2 and 5, a dynamic vibration reducer 213 is disposed by utilizing a space in the side regions toward the upper portion within the body 103, or more specifically, right and left spaces 211 existing between the right and left inner wall surfaces of the side regions of the crank housing 107 and the right and left outer wall surfaces of the side regions of the upper housing 109a. The spaces 211 correspond to the lower region of the cylinder 141 and extend in a direction parallel to the axis of the cylinder 141 or the longitudinal direction of the cylinder 141. Therefore, in this case, as shown by dashed lines in FIGS. 2 and 5, the dynamic vibration reducer 213 has a cylindrical shape and is disposed such that the direction of movement of the weight or the vibration reducing direction coincides with the longitudinal direction of the hammer bit 119. The dynamic vibration reducer 213 is the same as the first embodiment in the construction, except for the shape, including a body, a weight and biasing springs, which are not shown.

According to the first embodiment, in which the dynamic vibration reducer 213 is placed in the right and left spaces 211 existing between the right and left inner wall surfaces of the side region of the crank housing 107 and the right and left outer wall surfaces of the side region of the upper housing 109a, like the useful example the dynamic vibration reducer 213 can perform the vibration reducing action in working operation of the hammer drill 101, while avoiding size increase of the body 103. Further, the dynamic vibration reducer 213 can be protected from an outside impact in the event of drop of the hammer drill 101. Especially in the first embodiment, the dynamic vibration reducer 213 is disposed in a side recess 109c of the upper housing 109a, so that the amount of protrusion of the dynamic vibration reducer 213 from the side of the upper housing 109a can be lessened. Therefore, high protection can be provided against an outside impact. The upper housing 109a is shaped to minimize the clearance between the mechanism component parts within the upper housing 109a and the inner wall surface of the upper housing 109a, To this end, the side recess 109c is formed in the upper housing 109a. Specifically, due to the positional relationship between the cylinder 141 and a driving gear of the motion converting mechanism 113 or the power transmitting mechanism 117 which is located below the cylinder 141, the side recess 109c is defined as a recess formed in the side surface of the upper housing 109a and extending in the axial direction of the cylinder 141. The side recess 109c is a feature that corresponds to the "recess" according to this invention.

Further, in the first embodiment, the dynamic vibration reducer 213 is placed very close to the center of gravity G of the hammer drill 101 as described above. Therefore, even with a provision of the dynamic vibration reducer 213 in this position, the hammer drill 101 can be held in good balance of weight in the vertical and horizontal directions perpendicular to the longitudinal direction of the hammer bit 119, so that generation of vibration in these vertical and horizontal directions can be effectively lessened or prevented. Moreover, the dynamic vibration reducer 213 is placed relatively close to the axis of the cylinder 141, so that it can perform an effective vibration reducing function against vibration input in working operation of the hammer drill 101.

As shown in FIGS. 2 and 5, the hammer drill 101 having the driving motor 111 includes a cooling fan 121 for cooling the driving motor 111. When the cooling fan 121 is rotated, cooling air is taken in through inlets 125 of a cover 123 that covers the rear surface of the body 103. The cooling air is then led upward within the motor housing 105 and cools the driving motor 111. Thereafter, the cooling air is discharged to the outside through an outlet 105a formed in the bottom of the motor housing 105. Such a flow of the cooling air can be relatively easily guided into the region of the dynamic vibration reducer 213. Thus, according to the first embodiment, the dynamic vibration reducer 213 can be advantageously cooled by utilizing the cooling air for the driving motor 111.

Further, in the hammer drill 101, when the motion converting mechanism 113 in the inner housing 109 is driven, the pressure within a crank chamber 127 (see FIG. 1) which comprises a hermetic space surrounded by the inner housing 109 fluctuates (by linear movement of the piston 113a within the cylinder 141 shown in FIG. 1). By utilizing the pressure fluctuations, a forced vibration method may be used in which a weight is positively driven by introducing the fluctuating pressure into the body of the dynamic vibration reducer 213. In this case, according to the first embodiment, with the construction in which the dynamic vibration reducer 213 is placed adjacent to the inner housing 109 that houses the motion converting mechanism 113, the fluctuating pressure in the crank chamber 127 can be readily introduced into the dynamic vibration reducer 213. Further, when, for example, the motion converting mechanism 113 comprises a crank mechanism as shown in FIG. 1, the construction for forced vibration of a weight of the dynamic vibration reducer 213 can be readily provided by providing an eccentric portion in the crank shaft. Specifically, the eccentric rotation of the eccentric portion is converted into linear motion and inputted as a driving force of the weight in the dynamic vibration reducer 213, so that the weight is forced vibrated.

(Second Embodiment) In the second representative embodiment, as shown in FIGS. 2 and 5, a dynamic vibration reducer 223 is disposed by utilizing a space in the side regions within the body 103, or more specifically, a space 221 existing between one axial end (upper end) of the driving motor 111 and the bottom portion of the lower housing 107b and extending along the axis of the cylinder 141 (in the longitudinal direction of the hammer bit 119). The space 221 extends in a direction parallel to the axis of the cylinder 141, or in the longitudinal direction. Therefore, in this case, as shown by dashed line in FIGS. 2 and 5, the dynamic vibration reducer 223 has a cylindrical shape and is disposed such that the direction of movement of the weight or the vibration reducing direction coincides with the longitudinal direction of the hammer bit 119. The dynamic vibration reducer 213 is the same as the useful example in the construction, except for the shape, including a body, a weight and biasing springs, which are not shown.

According to the second embodiment, in which the dynamic vibration reducer 223 is placed in the space 221 existing between one axial end (upper end) of the driving motor 111 and the lower housing 107b, like the useful example and the first embodiment, the dynamic vibration reducer 223 can perform the vibration reducing action in working operation of the hammer drill 101, while avoiding size increase of the body 103. Further, the dynamic vibration reducer 223 can be protected from an outside impact in the event of drop of the hammer drill 101.

In the second embodiment, the dynamic vibration reducer 223 is located close to the center of gravity G of the hammer drill 101 like the second embodiment and adjacent to the driving motor I 11. Therefore, like the first embodiment even with a provision of the dynamic vibration reducer 223 in this position, the hammer drill 101 can be held in good balance of weight in the vertical and horizontal directions perpendicular to the longitudinal direction of the hammer bit 119. Moreover, a further cooling effect can be obtained especially because the dynamic vibration reducer 223 is located in the passage of the cooling air for cooling the driving motor 111. Further, although the dynamic vibration reducer 223 is located at a slight more distance from the crank chamber 127 compared with the second embodiment, the forced vibration method can be relatively easily realized in which a weight is positively driven by introducing the fluctuating pressure of the crank chamber into the dynamic vibration reducer 223.
In the above-described embodiments, an electric hammer drill has been described as a representative example of the power tool. However, other than the hammer drill, this Invention can not only be applied, for example, to an electric hammer in which the hammer bit 119 performs only a hammering movement, but to any power tool, such as a reciprocating saw and a jigsaw, in which a working operation is performed on a workpiece by reciprocating movement of the tool bit.

### Description of Numerals

101 hammer drill (power tool)
102 handgrip
102a grip
102b, 102c upper and lower connecting portions
103 body (housing)
105 motor housing (outer housing)
105a outlet
107 crank housing
109 inner housing
109a upper housing
109b lower housing
109c side recess (recess)
111 driving motor (motor)
111 a output shaft
111b rotor
113 motion converting mechanism (internal mechanism)
113a piston
113b crank shaft
115 striking mechanism
115a striker
117 power transmitting mechanism
117a gear shaft
119 hammer bit (tool bit)
121 cooling fan
123 cover
125 inlet
127 crank chamber
131,133 gear
131a, 133a
137 tool holder
141 cylinder
151 front bearing
153 rear bearing
155 weight
157 biasing spring (elastic element)
159 projection
201, 211, 221, 231 space
213, 223, 233 dynamic vibration reducer
241 space
243 dynamic vibration reducer
245 vibration reducer body
247 weight
248 projection
249 biasing spring
251 space
253 dynamic vibration reducer
255 vibration reducer body
257 weight
258 projection
259 biasing spring
261, 271 space
263, 273 dynamic vibration reducer

## Claims

1. A power tool, comprising
a housing (105, 107) having a front side and a rear side on opposite sides in a longitudinal direction, a lower side and an upper side on opposite sides in a vertical direction perpendicular to the longitudinal direction, and a left side and a right side on opposite sides in a lateral direction perpendicular to the longitudinal and vertical directions,
a motor (111),
an internal mechanism being housed in an inner housing (109) and comprising a motion converting mechanism (113) driven by the motor, a cylinder (141) having a cylinder axis extending in the longitudinal direction, and a striking element (115) that is adapted to be driven to linear motion in the cylinder (141) in the longitudinal direction by the motion converting mechanism (113),
the housing (105, 107) housing the motor (111) in a lower part and the inner housing (109) in an upper part of the housing, the power tool being adapted to have a tool bit (119) mounted at the front side of the housing (105, 107) and driven by the internal mechanism in the longitudinal direction to perform a predetermined operation,
a handgrip (102) connected to the rear side of the housing (105, 107), and
a dynamic vibration reducer including a weight and an elastic element, the elastic element being disposed between the weight and the housing and adapted to apply a biasing force to the weight,
wherein the weight reciprocates in the longitudinal direction against the biasing force of the elastic element, whereby the dynamic vibration reducer reduces vibration which is caused in the housing in the longitudinal direction in the working operation, **characterized**
**in that** the dynamic vibration reducer is disposed by utilizing an internal space defined by the housing (105, 107),
**in that** right and left internal spaces (211, 221) are provided between the right and left inner side surfaces of the housing (105, 107) and the right and left outer wall surfaces of the inner housing (109) below the cylinder axis and/or in right and left side regions within the housing (105, 107) between an axial upper end of the motor (111) and a bottom portion of the inner housing (109) and extend in the longitudinal direction, and
by a pair of the dynamic vibration reducers (213, 223) in the right and left internal spaces (211, 221).

2. The power tool as defined in claim 1, wherein the axial direction of the motor (111) crosses the longitudinal direction.

3. The power tool as defined in claim 2, wherein a center of gravity (G) of the power tool (101) is located below the axis of the cylinder (141) and slightly forward of the axis of the motor (111) and the dynamic vibration reducer is placed close to the center of gravity (G).

4. The power tool as defined in claim 3, wherein the dynamic vibration reducer (213) is, in a side view of the power tool, placed between the axis of the cylinder (141) and the center of gravity (G) of the power tool.

5. The power tool as defined in one of claims 1 to 4, wherein the weight of the dynamic vibration reducer (213, 223) is forced to vibrate by using pressure fluctuations in the inner housing or the output of the motion converting mechanism to positively drive the weight.

## Patentansprüche

1. Kraftwerkzeug, mit
einem Gehäuse (105, 107), das eine Vorderseite und eine Hinterseite an entgegengesetzten Seiten in einer Längsrichtung, eine untere Seite und eine obere Seite an entgegengesetzten Seiten in einer vertikalen Richtung senkrecht zu der Längsrichtung und eine linke Seite und eine rechte Seite an entgegengesetzten Seiten in einer seitlichen Richtung senkrecht zu der Längsrichtung und der vertikalen Richtung aufweist,
einem Motor (111),
einem internen Mechanismus, der in einem inneren Gehäuse (109) aufgenommen ist und der einen Bewegungsumwandlungsmechanismus (113), der durch den Motor angetrieben wird, einen Zylinder (141), der eine Zylinderachse aufweist, die sich in der Längsrichtung erstreckt, und ein Schlagelement (115), das angepasst ist zur linearen Bewegung in dem Zylinder (141) in der Längsrichtung durch den Bewegungsumwandlungsmechanismus (113) angetrieben zu werden, aufweist,
wobei das Gehäuse (105, 107) den Motor (111) in einem unteren Bereich und das innere Gehäuse (109) in einem oberen Bereich des Gehäuses aufnimmt und das Kraftwerkzeug dazu angepasst ist, dass ein Werkzeugbit (119) an der Vorderseite des Gehäuses (105, 107) angebracht ist und durch den internen Mechanismus in der Längsrichtung zum Ausführen eines vorbestimmten Betriebs angetrieben wird,
einem Handgriff (102), der mit der Hinterseite des Gehäuses (105, 107) verbunden ist, und einem dynamischen Vibrationsreduzierer, der ein Gewicht und ein elastisches Element aufweist, wobei das elastische Element zwischen dem Gewicht und dem Gehäuse angeordnet ist und zum Ausüben einer Vorspannkraft auf das Gewicht angepasst ist,
bei dem das Gewicht sich in der Längsrichtung gegen die Vorspannkraft des elastischen Elements hin und her bewegt, wodurch der dynamische Vibrationsreduzierer die Vibration, die in dem sich das Gehäuse der Längsrichtung bei dem Arbeitsbetrieb verursacht wird, reduziert, **gekennzeichnet**
**dadurch, dass** der dynamische Vibrationsreduzierer durch Nutzen eines internen Raums, der durch das Gehäuse (105, 107) definiert ist, angeordnet ist,
**dadurch**, dass ein rechter und linker interner Raum (211, 221) zwischen der rechten und der linken inneren Seitenoberfläche des Gehäuses (105, 107) und der rechten und linken äußeren Wandoberfläche des inneren Gehäuses (109) unterhalb der Zylinderachse und/oder in rechten und linken seitlichen Bereichen innerhalb des Gehäuses (105, 107) zwischen einem axialen oberen Ende des Motors (111) und einem Bodenbereich des inneren Gehäuses (109) vorgesehen sind und sich in der Längsrichtung erstrecken, und
durch ein Paar von dynamischen Vibrationsreduzierern (213, 223) in dem rechten und linken internen Raum (211, 221).

2. Kraftwerkzeug nach Anspruch 1, bei dem die axiale Richtung des Motors (111) die Längsrichtung kreuzt.

3. Kraftwerkzeug nach Anspruch 2, bei dem der Schwerpunkt (G) des Kraftwerkzeugs (101) unterhalb der Achse des Zylinders (141) und etwas vor der Achse des Motors (111) befindlich ist und der dynamische Vibrationsreduzierer nahe dem Schwerpunkt (G) angeordnet ist.

4. Kraftwerkzeug nach Anspruch 3, bei dem der dynamische Vibrationsreduzierer (213), in einer Seitenansicht des Kraftwerkzeugs, zwischen der Achse des Zylinders (141) und dem Schwerpunkt (G) des Kraftwerkzeugs angeordnet ist.

5. Kraftwerkzeug nach einem der Ansprüche 1 bis 4, bei dem das Gewicht des dynamischen Vibrationsreduzierers (213, 223) gezwungen wird zum Vibrieren durch Nutzen von Druckschwankungen in dem inneren Gehäuse oder des Ausgangs des Bewegungsumwandlungsmechanismus zum positiven Antreiben des Gewichts.

## Revendications

1. Un outil électrique, comprenant
un boîtier (105, 107) ayant un côté avant et un côté arrière situés sur des côtés opposés sur une direction longitudinale, un côté inférieur et un côté supérieur situés sur des côtés opposés sur une direction verticale perpendiculaire à la direction longitudinale, un côté gauche et un côté droit situés sur des côtés opposés sur une direction latérale perpendiculaire aux directions longitudinale et verticale,
un moteur (111),
un mécanisme interne agencé dans un boîtier interne (109) et comprenant un mécanisme de conversion de mouvement (113) entrainé par le moteur, un vérin (141) ayant un axe de vérin s'étendant dans la direction longitudinale, et un élément de percussion (115) destiné à être entrainé selon un mouvement linéaire dans le vérin (141) suivant la direction longitudinale par le mécanisme de conversion de mouvement 113),
Le boîtier (105, 107) renfermant le moteur (111) dans une partie inférieure et le boîtier interne (109) dans une partie supérieure du boîtier, l'outil électrique étant prévu pour avoir un outil rapporté (119) monté à l'emplacement du côté avant du boîtier (105, 107) et entrainé par le mécanisme interne dans la direction longitudinale afin de réaliser une opération prédéterminée,
une poignée (102) reliée au côté arrière du boîtier (105, 107), et
un réducteur de vibration dynamique comprenant un poids et un élément élastique, l'élément élastique étant agencé entre le poids et le boîtier et prévu pour appliquer une force de sollicitation sur le poids,
dans lequel le poids exerce un mouvement alternatif suivant la direction longitudinale à l'encontre de la force de sollicitation de l'élément élastique, le réducteur de vibration dynamique réduisant par conséquent la vibration créée dans le boîtier dans la direction longitudinale lors du fonctionnement, **caractérisé**
**en ce que** le réducteur de vibration dynamique est agencé en utilisant un espace interne défini par le boîtier (105, 107),
**en ce que** des espaces internes droit et gauche (211, 221) sont prévus entre les surfaces latérales internes droite et gauche du boîtier (105, 107) et les surfaces de paroi externes droite et gauche du boîtier interne (109) situées sous l'axe de vérin et/ou dans des zones latérales droite et gauche situées dans le boîtier (105, 107) entre une extrémité axiale supérieure du moteur (111) et une partie inférieure du boîtier interne (109), et s'étendent dans la direction longitudinale, et
par deux réducteurs de vibration dynamique (213, 223) agencés dans les espaces internes droit et gauche (211, 221).

2. L'outil électrique tel que défini à la revendication 1, dans lequel la direction axiale du moteur (111) croise la direction longitudinale.

3. L'outil électrique tel que défini à la revendication 2, dans lequel un centre de gravité (G) de l'outil électrique (101) est situé en-dessous de l'axe du vérin (141) et légèrement en avant de l'axe du moteur (111) et le réducteur de vibration dynamique est agencé à proximité du centre de gravité (G).

4. L'outil électrique tel que défini à la revendication 3, dans lequel le réducteur de vibration dynamique (213) est, selon une vue latérale de l'outil électrique, agencé entre l'axe du vérin (141) et le centre de gravité (G) de l'outil électrique.

5. L'outil électrique tel que défini dans l'une des revendications 1 à 4, dans lequel le poids du réducteur de vibration dynamique (213, 223) est amené à vibrer par l'utilisation de variations de pression dans le boîtier interne ou la sortie du mécanisme de conversion de mouvement afin d'entrainer directement le poids.
